# EUROPEAN PATENT APPLICATION

(11) **EP 4 834 533 A1**
(43) Date of publication of application: **04.11.2026**
(21) Application number: 26173861.1
(22) Date of filing: 22.04.2026
(51) Int. Cl.: B25F 3/00, B23B 51/04, B25B 21/00

(54) **QUICK-CONNECT DEVICE FOR POWER TOOL AND POWER TOOL**

(30) Priority: 30.04.2025 CN 202510579662
(71) Applicant: Bosch Power Tools (China) Co., Ltd., Zhejiang 310052 (CN)
(72) Inventor: YAN, Zhenjun, Hangzhou, Zhejiang, 310052 (CN)
(74) Representative: Bee, Joachim

(57) **Abstract**

The present invention discloses a quick-connect device for a power tool, comprising: a sleeve having a first sliding groove, the first sliding groove having a locking portion extending in the circumferential direction and an unlocking portion extending in the axial direction; a rotating base fixedly connected to the sleeve in the axial direction and rotatable relative to the sleeve in the circumferential direction, the rotating base having a positioning pin for engaging with a tool head; a centering shaft rotatably disposed synchronously with the rotating base and linearly movable relative to the rotating base in the axial direction, the centering shaft having a first connecting end for connecting to the power tool body and a second connecting end for connecting to the tool head in the axial direction; and a sliding pin, wherein, when the sliding pin slides from the locking portion of the first sliding groove to the unlocking portion, the centering shaft can move axially relative to the rotating base, and when the sliding pin is at the first end position of the unlocking portion, the second connecting end extends relative to the positioning pin and can be used for connecting to the tool head; when the sliding pin is at the second end position of the locking portion, the second connecting end is in a stable state of retraction relative to the positioning pin.

## Description

### Technical Field

The present invention relates to a connecting device, and more particularly to a connecting device for connecting between the body of a power tool and the tool head.

### Background Art

Power tools often require the tool head to be assembled with the tool body during use. When operation is needed, the tool head attaches to the tool body, and the motor in the tool body drives the tool head to perform the desired operation. This attachment of the tool head to the tool body typically requires an intermediate connecting device.

For example, in the case of a hole saw, it is connected to the power tool body via a spindle system, thereby transmitting the rotation of the motor shaft to the hole saw.

Current connecting devices suffer from drawbacks such as complex structure, inconvenient use, and unstable power transmission.

### Summary of the Invention

One objective of the present invention is to provide a quick-connect device for a power tool that enables rapid assembly of the tool head with the power tool. It features a simple structure, ease of operation, and stable transmission of the rotational output from the power tool to the tool head.

To achieve the above objectives, the present invention provides a quick-connect device for a power tool, used to connect the power tool body and the tool head; the quick-connect device comprises:
a sleeve having a first sliding groove on its circumferential wall, the first sliding groove having a locking portion extending in the circumferential direction and an unlocking portion extending in the axial direction;
a rotating base fixedly connected to the sleeve in the axial direction and rotatable relative to the sleeve in the circumferential direction, the rotating base having a positioning pin extending from the axial end face toward the tool head side for engaging with the tool head, the rotating base having a second sliding groove extending in the axial direction on its circumferential wall;
a centering shaft passing through an axial center hole in a rotating base, the centering shaft being rotatably mounted synchronously with the rotating base and capable of linear movement relative to the rotating base in the axial direction, the centering shaft having a first connecting end for connection to a power tool body and a second connecting end for connection to a tool head in the axial direction; and
a sliding pin, the tail end of which is connected to the centering shaft, the sliding pin passing through a second sliding groove so that its head end is positioned within the first sliding groove;
wherein, when the sliding pin slides from the locking portion to the unlocking portion of the first sliding groove, the centering shaft is capable of axial movement relative to the rotating base, when the sliding pin is at the first end position of the unlocking portion, the second connecting end extends relative to the positioning pin and is capable of connection to the tool head, and when the sliding pin is at the second end position of the locking portion, the second connecting end is in a stable state of retraction relative to the positioning pin.

Another object of the present invention is to provide a power tool that enables rapid assembly of the tool head and the power tool body, and which has a simple structure and is convenient to use.

Based on the above-mentioned object of the invention, the present invention also provides a power tool, which comprises a power tool body and a quick-connect device as described above, wherein a first connecting end is connected to the power tool body.

The quick-connect device for a power tool according to the present invention has a simple structure, is convenient to operate, and is inexpensive. While enabling rapid assembly of the tool head with the power tool, it also ensures stable transmission of the power tool's rotation to the tool head.

### Brief Description of the Drawings

FIG. 1 schematically shows a power tool.
FIG. 2 is a schematic diagram of the split structure of the quick-connect device according to one embodiment of the present invention.
FIG. 3 partially shows the structure of the quick-connect device according to one embodiment of the present invention.
FIG. 4 is a cross-sectional view of the quick-connect device according to one embodiment of the present invention.
FIG. 5 shows the quick-connect device according to the present invention in one embodiment with the sliding pin in the first end position.

### Detailed Description of the Embodiments

Further explanation and description of the quick-connect device for a power tool and a power tool described herein will be provided below in conjunction with the accompanying drawings and specific embodiments of the specification. However, the explanation and description do not constitute an undue limitation on the technical solution of the present invention.

Power tools often require the tool head to be assembled with the tool body during use. When operation is needed, the tool head attaches to the tool body, and the motor in the tool body drives the tool head to perform the desired operation.

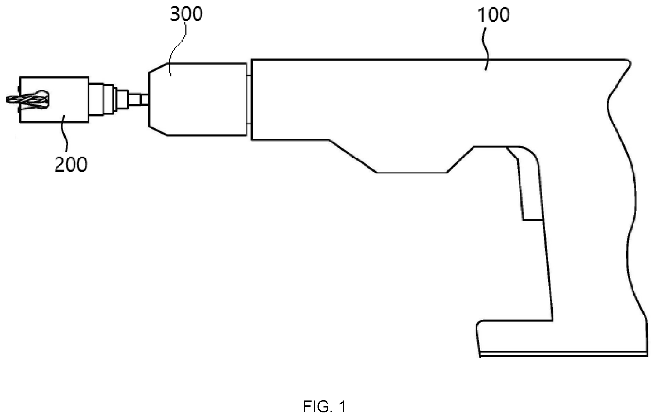

For example, as shown in FIG. 1, when it is necessary to mount the tool head 200 onto the power tool body 100, this may be achieved through a connecting device 300 located between the power tool body and the tool head.

For example, in the case of a hole saw, it is connected to the power tool body via a spindle system, thereby transmitting the rotation of the motor shaft to the hole saw for related operations.

Current connecting devices suffer from drawbacks such as complex structure, inconvenient use, and unstable power transmission.

Based on this, in one embodiment of the present invention, a quick-connect device for a power tool is provided, which has a simple structure, is convenient to use, and can stably transmit the rotational motion of the power tool to the tool head, ensuring that the tool head operates efficiently, safely and stably.

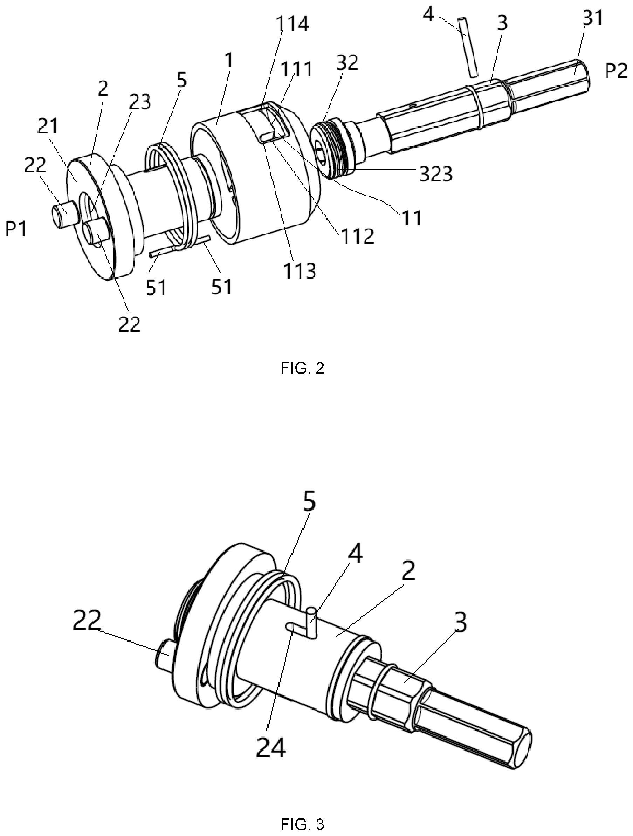

FIG. 2 is a schematic diagram of the split structure of the quick-connect device according to one embodiment of the present invention.

As shown in FIG. 2, in one embodiment, the quick-connect device for a power tool comprises:
a sleeve 1, having a first sliding groove 11 on its circumferential wall, the first sliding groove 11 having a locking portion 111 extending in the circumferential direction and an unlocking portion 112 extending in the axial direction;
a rotating base 2, partially inserted into the sleeve 1, the rotating base 2 being fixedly connected to the sleeve in the axial direction and rotatable relative to the sleeve 1 in the circumferential direction, wherein the axial end face 21 of the rotating base 2 has a positioning pin 22 extending from the axial end face toward the tool head side, the positioning pin 22 being used to engage with the tool head, the rotating base 2 has an axial center hole 23, and furthermore, as shown in FIG. 3, the circumferential wall of the rotating base 2 has a second sliding groove 24 extending in the axial direction; and
a centering shaft 3, which is disposed through the axial center hole 23 in the rotating base 2, the centering shaft 3 being rotatably disposed synchronously with the rotating base 2 and capable of linear movement relative to the rotating base 2 in the axial direction, wherein the centering shaft 3 has a first connecting end 31 for connecting with the power tool body and a second connecting end 32 for connecting with the tool head in the axial direction.

It should be noted that the aforementioned axial direction comprises the direction of the central axis of the quick-connect device and the direction parallel to the central axis.

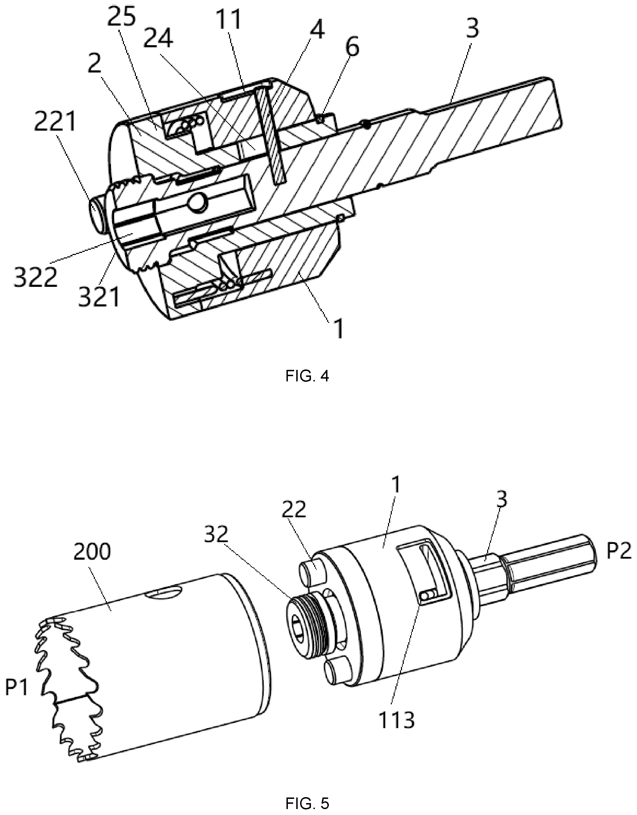

As shown in FIGS. 2 and 4, the sliding pin 4 has its tail end connected to the centering shaft 3, and the sliding pin 4 passes through the second sliding groove 24 so that its head end is located in the first sliding groove 11. In some more specific embodiments, the tail end of the sliding pin 4 may be integrally fixedly connected to the centering shaft by an interference fit.

With this configuration, when the sliding pin 4 is in the locking portion 111 of the first sliding groove 11, the sliding pin 4 and the centering shaft 3 fixedly connected to the tail end of the sliding pin 4 cannot move in the axial direction. When the sliding pin 4 slides from the locking portion 111 of the first sliding groove 11 to the unlocking portion 112, the centering shaft 3 can move axially relative to the rotating base. When the sliding pin is in the first end position 113 of the unlocking portion, the sliding pin 4 abuts against the end position of the unlocking portion and remains stable. The second connecting end 32 of the centering shaft 3 extends relative to the positioning pin 22 and can be used to connect with the tool head. After connecting with the tool head, when the sliding pin 4 returns to the locking portion and is in the second end position of the locking portion, the second connecting end 32 of the centering shaft 3 is in a stable state of retraction relative to the positioning pin 22.

Specifically, in some embodiments, in the initial state where there is no need to assemble the tool head, the second connecting end 32 of the centering shaft 3 may be in the position shown in FIG. 4, that is, the axial end face 321 of the second connecting end 32 does not protrude significantly from the axial end face 221 of the positioning pin 22. At this time, since the second connecting end 32 is retracted within the positioning pin 22, due to the interference of the positioning pin, the second connecting end 32 cannot be inserted into the connecting hole of the tool head (e.g., a hole saw) and connected to the connecting hole of the tool head.

In this state, if a tool head needs to be assembled, the operator may apply external force to the sleeve 1, causing the sleeve 1 to rotate relative to the rotating base 2 and the centering shaft 3. This causes the sliding pin 4 to slide along the locking portion 111 of the first sliding groove 11 until the sliding pin 4 disengages from the locking portion 111 and slides to the unlocking portion 112. At this time, the centering shaft 3 can move axially relative to the rotating base 2. In this state, the operator may push the sleeve and the rotating base 2, which is fixedly connected to it in the axial direction, toward the power tool body side P2 in the axial direction, so that the centering shaft 3 moves toward the tool head side P1 in the axial direction relative to the rotating base 2. During this process, the sliding pin 4 also moves toward the tool head side in the unlocking portion 112. As shown in FIG. 5, when the sliding pin 4 moves to the first end position 113, it abuts against the first end position and remains stable. At this time, the second connecting end 32 of the centering shaft 3 extends relative to the positioning pin 22 (for example, the threaded section of the second connecting end is completely outside the positioning pin), and the second connecting end 32 can be inserted into the connecting hole of the tool head to achieve connection with the tool head. At this time, the tool head 200 (for example, a hole saw) can be screwed onto the second connecting end 32.

After the second connecting end 32 is connected to the tool head, the sliding pin 4 may be moved away from the end position 113 of the unlocking portion in the first sliding groove 11. At this time, the centering shaft 3 will move relative to the rotating base 2 along the axial direction toward the power tool body side P2, so that the second connecting end 32 retracts relative to the positioning pin 22. That is, the positioning pin 22 extends relative to the second connecting end 32. At this time, the positioning pin 22 may be smoothly and quickly inserted into the positioning hole of the tool head 200 that matches it, so that the rotation output by the power tool is stably transmitted to the tool head. This ensures the machining accuracy on the one hand, and also plays a role in shock absorption on the other hand.

In some more specific embodiments, as shown in FIG. 4, in the initial state where there is no need to assemble the tool head, and in the working state of the power tool with the tool head already installed on the power tool body, the sliding pin 4 is located at the second end position 114 of the locking portion 111 of the first sliding groove 11, at which time the axial end face 321 of the second connecting end 32 is substantially flush with the axial end face 221 of the positioning pin 22.

Alternatively, in some other more specific embodiments, in the initial state where there is no need to assemble the tool head, and in the working state of the power tool with the tool head already installed on the power tool body, the sliding pin 4 is located at the second end position 114 of the locking portion 111 of the first sliding groove 11, at which time the axial end face of the second connecting end 32 may be closer to the power tool body side P2 relative to the axial end face of the positioning pin.

It should be noted that the retraction of the second connecting end 32 relative to the positioning pin 22 mentioned in the present invention is not limited to the axial end face 321 of the second connecting end 32 necessarily being closer to the power tool body side P2 than the axial end face 221 of the positioning pin 22. Rather, it means that compared to the state where the sliding pin is in the first end position 113, when the sliding pin is in the second end position 114, the second connecting end 32 moves relative to the positioning pin 22 toward the power tool body side P2.

Therefore, in some alternative embodiments, in the initial state where there is no need to assemble the tool head, and in the working state of the power tool where the tool head has been installed on the power tool body, the axial end face 321 of the second connecting end 32 may be slightly closer to the tool head side P1 relative to the axial end face 221 of the positioning pin 22, but does not extend significantly in this direction. Therefore, the second connecting end does not yet have a connecting section with a certain axial length that can be stably connected to the tool head.

In some more specific embodiments, as shown in FIG. 2, the second connecting end is provided with a threaded connecting section 323.

In some more specific embodiments, the axial connection between the rotating base 2 and the sleeve 1 can be achieved by a limiting element in the axial direction.

For example, in some more specific embodiments, as shown in FIG. 4, one end of the rotating base 2 has a shaft end cap 25 with an axial cross-sectional area greater than or equal to the axial cross-sectional area of the sleeve, so that the rotating base may be placed on the sleeve and cannot move further relative to the sleeve toward the power tool body side P2. At the other end, the rotating base 2 may be axially limited to the sleeve by a snap ring 6.

Furthermore, in some more specific embodiments, the synchronous rotation of the centering shaft 3 and the rotating base 2 in the circumferential direction may be achieved by the shape matching between the outer circumferential wall of the centering shaft 3 and the axial center hole 23 of the rotating base 2.

For example, in some more specific embodiments, the outer circumferential wall of the centering shaft 3 may be prismatic, such as hexagonal, and correspondingly, the portion of the axial center hole that mates with this section of the outer circumferential wall is also prismatic, such as hexagonal.

In some more specific embodiments, as shown in FIG. 2, the first sliding groove 11 may be configured as an L-shape.

Of course, in other more specific embodiments, the first sliding groove 11 may also be a groove of other shapes having a certain circumferential extension length and an axial extension length.

In some more specific embodiments, as shown in FIG. 2, in order to further improve the stability of the power tool body outputting rotation to the tool head, multiple positioning pins 22 may be provided, for example, at least two as shown in FIG. 2, and more preferably, these multiple positioning pins may be provided on the same concentric circle concentric with the centering shaft to balance the transmission of force and torque.

In some specific embodiments, in order to further improve the convenience of operation and enhance the user experience, as shown in FIG. 2, the quick-connect device may also comprise an elastic element 5, which is disposed between the sleeve 1 and the rotating base 2 to apply an elastic force in the circumferential direction.

In some more specific embodiments, the elastic element 5 may comprise a torsion spring having at least two legs to abut against the inner wall of the sleeve and the rotating base, respectively, to apply an elastic force in the circumferential direction.

In this configuration, after the operator has connected the second connecting end to the tool head, they push the sleeve 1 towards the power tool body side P2. When the sliding pin 4 has just slid to the locking portion 111 of the sliding groove, the operator releases the sleeve. The sleeve will then automatically and quickly reset under the elastic force of the elastic element 5, thereby causing the sliding pin to quickly slide to the stable second end position 114.

In some more specific embodiments, the quick-connect device also comprises a guide drill bit (not shown in FIGS. 2 to 5) that connects to a connecting hole 322 at the second connecting end of the centering shaft to create a guide hole in the workpiece to facilitate precise cutting with the tool head.

In another embodiment of the present invention, a power tool is also provided, which comprises a power tool body 100 and a quick-connect device as described above connected to the power tool body 100. One end of the quick-connect device is connected to the power tool body in the axial direction, and the other end in the axial direction is connected to the tool head 200.

In some more specific embodiments, the tool head may comprise a hole saw.

It should be noted that the quick-connect device according to the present invention is not limited to hole saws; it can also be applied to other power tool bodies that output rotation to the tool head.

Therefore, the quick-connect device for a power tool according to the present invention greatly improves the ease of operation for assembling the tool head and the power tool through a simple structural design. Furthermore, while enabling quick assembly of the tool head and the power tool, it also allows the power tool to transmit rotation to the tool head with extremely high stability, thereby ensuring the effectiveness of the power tool while greatly enhancing the user experience.

It is to be noted that the prior art portion of the protective scope of the present invention is not limited to the embodiments given in the present invention. All prior art that does not contradict the solution of the present invention, including but not limited to prior patent documents, prior publications, prior public uses, etc., can be included in the protective scope of the present invention.

In addition, the combinations of the various technical features in the present case are not limited to the combinations recorded in the claims of the present case or the combinations recorded in the specific embodiments. All the technical features recorded in the present case may be freely combined or combined in any manner, unless there is a conflict between them.

It is also to be noted that the embodiments listed above are only specific embodiments of the present invention. Obviously, the present invention is not limited to the above embodiments. Any similar changes or modifications made thereto that can be directly derived or easily conceived by those skilled in the art from the content disclosed in the present invention should fall within the protective scope of the present invention.

## Claims

1. A quick-connect device for a power tool, used for connecting a power tool body (100) and a tool head (200); **characterized in that** the quick-connect device comprises:
a sleeve (1) having a first sliding groove (11) on its circumferential wall, the first sliding groove having a locking portion (111) extending in the circumferential direction and an unlocking portion (112) extending in the axial direction;
a rotating base (2) fixedly connected to the sleeve in the axial direction and rotatable relative to the sleeve in the circumferential direction, the rotating base having a positioning pin (22) extending from the axial end face (21) toward the tool head side for engaging with the tool head, the rotating base having a second sliding groove (24) extending in the axial direction on its circumferential wall;
a centering shaft (3) passing through an axial center hole (23) in a rotating base, the centering shaft being rotatably mounted synchronously with the rotating base and capable of linear movement relative to the rotating base in the axial direction, the centering shaft having a first connecting end (31) for connection to a power tool body and a second connecting end (32) for connection to a tool head in the axial direction; and
a sliding pin (4), the tail end of which is connected to the centering shaft, the sliding pin passing through a second sliding groove so that its head end is positioned within the first sliding groove;
wherein, when the sliding pin slides from the locking portion to the unlocking portion of the first sliding groove, the centering shaft is capable of axial movement relative to the rotating base, when the sliding pin is at the first end position (113) of the unlocking portion, the second connecting end extends relative to the positioning pin and is capable of connection to the tool head, and when the sliding pin is at the second end position (114) of the locking portion, the second connecting end is in a stable state of retraction relative to the positioning pin.

2. The quick-connect device according to claim 1, **characterized in that**, when the sliding pin is in the second end position, the axial end face of the second connecting end is closer to the tool body side than the axial end face of the positioning pin; or the axial end face of the second connecting end is flush with the axial end face of the positioning pin.

3. The quick-connect device according to claim 1, **characterized in that** the first sliding groove is constructed in an L-shape.

4. The quick-connect device according to claim 1, **characterized in that** it further comprises an elastic element (5) disposed between the sleeve and the rotating base to apply an elastic force in the circumferential direction.

5. The quick-connect device according to claim 1, **characterized in that** the positioning pin comprises at least two pins disposed on the same concentric circle concentric with the centering shaft.

6. The quick-connect device according to claim 1, **characterized in that** the second connecting end is provided with a threaded connecting section (323).

7. The quick-connect device according to claim 1, **characterized in that** the outer circumferential wall of the centering shaft is shaped to match the axial center hole of the rotating base, so as to achieve synchronous rotation of the centering shaft and the rotating base.

8. The quick-connect device according to claim 1, **characterized in that** it further comprises a guide drill bit connected to a connecting hole at the second connecting end of the centering shaft.

9. A power tool comprising a power tool body, **characterized in that** it further comprises the quick-connect device according to any one of claims 1-8, wherein the first connecting end is connected to the power tool body.

10. The power tool according to claim 9, further comprising a tool head, the tool head comprising a hole saw.
